Europäisches Patentamt

European Patent Office

Office européen des brevets

(11) Numéro de publication: **0 186 676**
**B1**

## FASCICULE DE BREVET EUROPÉEN

(45) Date de publication du fascicule du brevet:
**19.04.89**

(51) Int. Cl.⁴: **B 01 L 3/00**, G 01 N 35/00

(21) Numéro de dépôt: **85902570.2**

(22) Date de dépôt: **04.06.85**

(86) Numéro de dépôt international:
**PCT/FR 85/00138**

(87) Numéro de publication internationale:
**WO 85/05563 (19.12.85 Gazette 85/27)**

(54) **MOYENS PROPRES A PERMETTRE LE SUPPORT, LE TRAITEMENT, LE STOCKAGE ET L'ANALYSE AUTOMATIQUES EN CONTINU D'ECHANTILLONS BIOLOGIQUES.**

(30) Priorité: **05.06.84 FR 8408769**

(43) Date de publication de la demande:
**09.07.86 Bulletin 86/28**

(45) Mention de la délivrance du brevet:
**19.04.89 Bulletin 89/16**

(84) Etats contractants désignés:
**DE GB SE**

(56) Documents cité:
**DE-A-1 900 806**
**DE-A-3 230 901**
**FR-A-2 353 856**
**US-A-3 497 320**
**US-A-3 619 024**
**US-A-3 620 678**
**US-A-3 728 061**

(73) Titulaire: **UNIVERSITE PARIS- NORD, Avenue Jean-Baptiste- Clément, F-93430 Villetaneuse (FR)**

(72) Inventeur: **BISCONTE, Jean- Claude, 4, rue Henri-Murger, F-75019 Paris (FR)**

(74) Mandataire: **Orès, Bernard, Cabinet ORES 6, Avenue de Messine, F-75008 Paris (FR)**

EP 0 186 676 B1

LIBER, STOCKHOLM 1989

## Description

La présente invention est relative à des moyens propres à permettre le support, le traitement, le stockage et l'analyse automatiques en continu d'échantillons biologiques, fixés ou vivants.

L'analyse d'échantillons biologiques, comme les frottis sanguins ou épithéliaux, les coupes histologiques ou les cultures bactériennes, requiert des phases séquentielles qui aboutissent souvent à une observation sous microscope. Dans la plupart des cas, on emploie le support classique constitué par des lames de verre sur lesquelles sont déposés les échantillons à analyser. Après différentes opérations, comme la fixation et la coloration, une lamelle de verre est déposée sur l'échantillon. Ce procédé est complexe et difficile à automatiser. Il se révèle inadéquat face aux capacités des analyseurs d'images automatiques dont l'emploi se généralise de plus en plus dans la pratique du laboratoire d'analyse médicale.

Dans le but de remplacer le support de verre rigide et individuel, il a été proposé par plusieurs auteurs d'utiliser un support souple transparent.

C'est ainsi que R.D. MAKENZIE décrit dans "Journal of Medical Laboratory Technology", 1962, volume 19, page 184, la préparation de frottis sanguins à l'aide d'une bande de matière plastique transparente.

Le Brevet britannique n° 1 036 776 décrit un appareil et un procédé d'application d'échantillons biologiques sur un ruban transparent de support pour l'analyse microscopique, lequel appareil comporte deux bobines de stockage et de défilement du ruban, dont une est contenue dans un bac de fixation, un dispositif d'application des échantillons sur le ruban, un moyen de repérage mécanique de ces échantillons par perforation du ruban, ainsi qu'un éventuel film transparent de protection des échantillons déposés sur le ruban enroulé sur lui-même.

En outre, ce document suggère la possibilité de faire coopérer cet appareil avec une série de bacs de traitements successifs, notamment contenant les liquides de coloration et rinçage.

Toutefois, l'appareil du Brevet britannique susdit n'a jamais été réalisé en pratique à l'échelle industrielle parce que les temps de fixation, séchage, rinçage, ou coloration sont très différents entre eux et peuvent varier de quelques minutes à plusieurs heures, ce qui rend impropres les appareils connus pour réaliser un traitement et une analyse microscopique réellement contenus.

La Demande de Brevet britannique GB-A-1 454 510, ainsi que les Brevets des Etats-Unis d'Amérique n° 4 137 866, 471 072 et 589 483, concernent également cette technique.

Le concept général sur lequel reposent toutes les techniques indiquées ci-dessus est l'utilisation d'un ruban transparent servant de support de recueil à des frottis dont l'application se fait automatiquement pendant le défilement du ruban. Bien que l'idée soit séduisante, elle se heurte notamment aux difficultés susdites, ce qui explique que la lame de verre reste encore universellement employée, alors que des méthodes substitutives apparaissent. C'est ainsi que TECHNICON, disposant pourtant de nombreux brevets sur le concept de ruban flexible, a choisi le système à flux liquide discontinu pour l'établissement de la formule sanguine. D'autres appareils, comme les compteurs et cytomètres en flux liquide peuvent prétendre à résoudre certains examens. De tels systèmes à flux liquide, très complexes et volumineux, présentent deux inconvénients majeurs:

- il n'est pas possible de contrôler les résultats de ces automates par un examen morphologique à l'oeil, ni d'archiver les préparations;
- le flux discontinu ou la cytométrie ne permettent pas de s'adapter facilement à des débits d'examens faibles ou qui varient beaucoup en raison notamment d'un coût élevé d'équipement.

De plus, ces systèmes à flux liquide sont totalement inadaptés à l'analyse de coupes histologiques, de biopsies et à l'examen bactériologique.

La présente invention a, en conséquence, pour but de pourvoir à des moyens propres à permettre le support, le traitement, le stockage et l'analyse automatiques en continu d'échantillons biologiques, fixés ou vivants, moyennant certains perfectionnements aux rubans flexibles et transparents connus antérieurement, ce qui permet en particulier:

- un repérage topographique très précis, à 10 μm près, d'évènements remarquables, constitués par exemple par des cellules suspectes;
- d'éviter de multiplier les temps de réaction pour le nombre d'échantillons déposés sur le ruban, chaque réaction pouvant avoir lieu simultanément pour tous les échantillons du ruban;
- l'analyse, notamment microscopique, d'échantillons biologiques vivants, en particulier l'analyse bactériologique, tout en tenant compte du temps d'incubation des cellules se divisant.

La présente invention a pour objet un ruban flexible et transparent réalisé en un polymère non hydrophobe et destiné à supporter des échantillons biologiques, caractérisé en ce qu'il est pourvu de deux épaulements, continus et longitudinaux, qui sont disposés le long des bords de la face du ruban opposée à la face destinée à supporter lesdits échantillons et qui délimitent un espace central.

Selon un mode de réalisation avantageux du ruban conforme à l'invention, les deux épaulements sont réalisés en un polymère, en particulier identique à celui dont est constitué le ruban.

Selon un mode de réalisation préféré du ruban conforme à l'invention, les deux épaulements sont réalisés en un matériau magnétique et constituent deux pistes latérales destinées non seulement au codage des échantillons biologiques à analyser, mais également au stockage d'informations, à cet effet chaque piste latérale pouvant être subdivisée en plusieurs pistes secondaires dont le nombre est fonction de la complexité de l'analyse et des informations à stocker.

Selon un autre mode de réalisation avantageux du ruban conforme à l'invention, celui-ci comporte une pluralité de rangées de micro-puits disposées perpendiculairement à l'axe longitudinal du ruban sauf en correspondance de l'emplacement desdits épaulements latéraux.

Le ruban, en outre, comporte avantageusement un film transparent auto-adhésif de protection des échantillons biologiques.

Alors que le mode de réalisation du ruban lisse convient à l'analyse d'échantillons biologiques fixés, le mode de réalisation du ruban à micro-puits convient à l'analyse d'échantillons biologiques vivants, notamment à l'analyse bactériologique.

Selon une disposition préférée de ce mode de réalisation, les micro-puits sont réalisés en une seule pièce avec le ruban (par moulage).

Selon une modalité avantageuse de cette disposition, les micro-puits sont polyédriques.

Selon une variante avantageuse de cette modalité, les micro-puits sont cylindriques.

Selon une variante avantageuse de ce mode de réalisation, ledit ruban porte des micro-puits constitués par des anneaux toroïdaux qui sont fixés, par collage ou autre, sur le ruban et lesdits épaulements présentent une hauteur majorée en sorte que ledit espace ménagé entre eux contient les micro-puits ainsi réalisés.

Selon une disposition avantageuse de ce mode de réalisation et de sa variante, ledit film de protection des échantillons biologiques est perméable ou imperméable à l'air, suivant que l'on désire que les réactions à l'intérieur desdits micro-puits s'effectuent en condition aérobie ou anaérobie.

Conformément à l'invention, dans le cas où les micro-puits sont obtenus par moulage, des tampons imprégnés d'un produit lyophilisé approprié, notamment d'un substrat, d'un colorant ou autre, sont appliqués sur la face dudit film de protection des micro-puits qui adhère au ruban, et la face de chaque tampon qui est orientée vers le fond du micro-puits correspondant est argentée pour permettre la réflexion de la lumière incidente en provenance d'un dispositif optique approprié, notamment à fibres optiques, un deuxième film adhésif protègeant lesdits tampons de produit lyophilisé.

Egalement conformément à l'invention, dans le cas où les micro-puits sont obtenus par application d'anneaux toroïdaux sur un ruban

lisse, lesdits tampons de produit lyophilisé sont disposés sur le fond de chaque micro-puits et logés en partie dans des encoches ménagées à la base de chaque anneau de manière à être maintenus en place par compression entre chaque anneau et le ruban.

Selon une variante préférée de cette disposition, ledit produit lyophilisé est logé dans une gorge circulaire, continue ou non, ménagée dans la paroi interne desdits anneaux toroïdaux, de manière que la libération du produit lyophilisé se fait par écrasement des micro-puits.

La présente invention a encore pour objet un dispositif d'analyse micoscopique d'échantillons biologiques fixés sur le ruban lisse conforme à l'invention, caractérisé en ce qu'il comporte deux mâchoires de serrage dudit ruban, dont une mâchoire est solidaire d'un condenseur de lumière, tandis que l'autre mâchoire est solidaire d'un objectif microscopique aligné avec le condenseur, ces deux mâchoires présentant chacune une ouverture centrale d'illumination et observation des échantillons, respectivement.

Selon un mode de réalisation avantageux du dispositif d'analyse conforme à l'invention, dans le cas d'une observation à sec les deux mâchoires sont articulées autour d'une charnière.

Selon un autre mode de réalisation avantageux du dispositif d'analyse conforme à l'invention, dans le cas d'une observation en phase liquide, à savoir à immersion, la mâchoire de support de l'objectif microscopique est fixée sur le fond d'une cuvette contenant le liquide d'immersion du ruban, tandis que la mâchoire de support du condenseur de lumière est séparée de la mâchoire portant l'objectif microscopique et s'emboîte, par encliquetage ou autre moyen, dans cette dernière après avoir reçu ledit ruban.

Outre les dispositions qui précèdent, l'invention comprend encore d'autres dispositions, qui ressortiront de la description qui va suivre.

L'invention sera mieux comprise à l'aide du complément de description qui va suivre, qui se réfère aux dessins annexés dans lesquels:

- la figure 1 représente une vue en coupe transversale du ruban de support d'échantillons biologiques, notamment fixés, selon l'invention;
- la figure 2 montre une coupe verticale du dispositif d'analyse microscopique à sec, conforme à l'invention, destiné à l'analyse des échantillons biologiques déposés sur le ruban de figure 1;
- la figure 3 montre une variante du dispositif d'analyse microscopique de la figure 2 permettant l'analyse en phase liquide;
- les figures 4a et 4b représentent des vues en perspective d'un autre mode de réalisation du ruban selon l'invention adapté à l'analyse d'échantillons biologiques vivants, notamment à l'analyse bactériologique;
- la figure 5 représente une variante du mode de réalisation des figures 4a et 4b, et

- la figure 6 représente une variante de réalisation des anneaux toroïdaux constituant des micro-puits de support d'échantillons vivants par rapport aux anneaux de figure 5.

Il doit être bien entendu, toutefois, que ces dessins et les parties descriptives correspondantes, sont donnés uniquement à titre d'illustration de l'objet de l'invention, dont ils ne constituent en aucune manière une limitation.

Aussi bien pour les frottis que pour les coupes histologiques qui sont destinés à l'analyse microscopique, il est indispensable de disposer d'un support possédant de bonnes qualités optiques, de rigidité et un indice de réfraction voisin de l'indice des tissus (compris entre 1.530 à 1.570). Il existe maintenant des polymères répondant à ces caractéristiques et très largement utilisés comme lamelles souples en culture cellulaire. Ils ont de plus l'avantage d'être mouillables, de présenter des propriétés d'adhérence élevée vis-à-vis des cellules, de résister aux solvants et produits de coloration (sauf acétone-éther) et de résister à un chauffage de plus de 100°C. On peut donc réaliser un frottis selon les moyens habituels, ou déposer des coupes histologiques sur un tel support et obtenir une excellente adhérence spontanée. Si nécessaire, on peut chauffer légèrement le support ou encore utiliser un support préalablement enduit d'une fine pellicule de gélatine ou d'une résine polymérisable aux ultraviolets, comme proposé par TECHNICON dans une Demande de Brevet aux Etats-Unis d'Amérique.

Le ruban 1 selon l'invention dispose de deux pistes latérales 2 formant épaulement qui sont en matériau magnétique pour le repérage magnétique, mais qui peuvent être en polymère comme le support et ne constituer que de simples surépaisseurs.

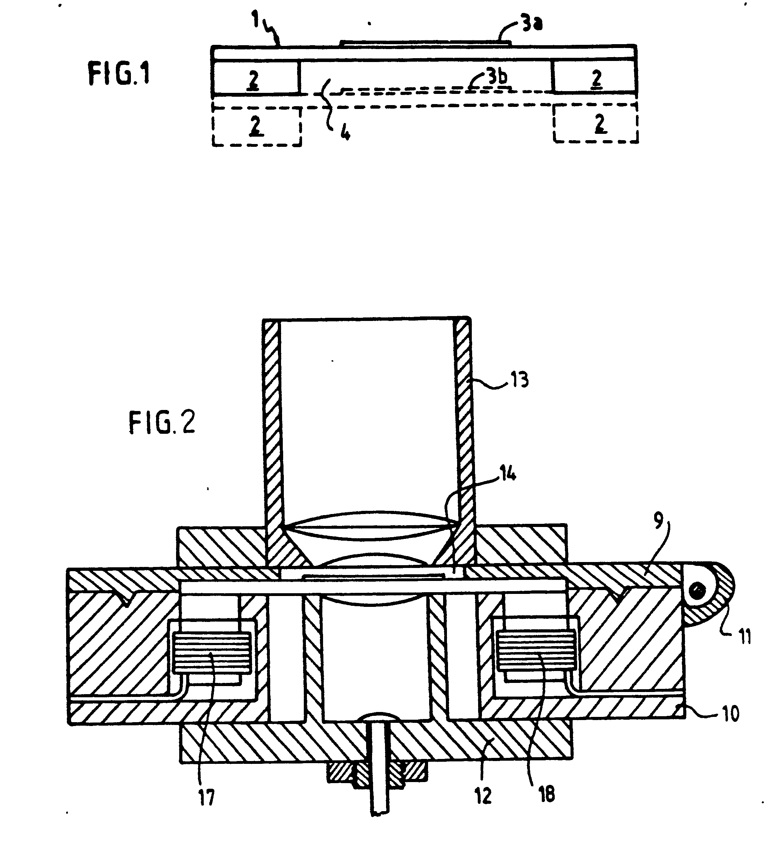

La figure 1 montre en coupe le support avec le ruban transparent 1, les pistes magnétiques 2 et un échantillon biologique 3a. Dessous, en pointillé, est représenté également en coupe une spire analogue comportant aussi un support 1, les pistes magnétiques 2 et un autre échantillon biologique 3b. On notera l'espace 4 ainsi ménagé entre deux spires et qui, d'une part protège les échantillons et, d'autre part, se comporte comme un réservoir dans lequel on peut placer différentes substances, comme nous le verrons plus loin.

Notons que l'application sur le ruban d'échantillons fixés (à savoir non vivants) peut être automatisée en utilisant un microtome pour les échantillons histologiques ou un dispositif d'étalement hématologique pour les échantillons sanguins, du type connu des techniciens en la matière.

Le ruban selon l'invention évite totalement le montage d'une lamelle grâce à un dispositif optique original d'observation à immersion que nous allons décrire et qui présente de plus l'avantage d'une mise au point préréglée.

Comme le montre la figure 2, le support 1 vient s'insérer entre deux mâchoires 9 et 10 qui sont articulées autour d'une charnière 11 dans le cas d'une observation à sec. Le support 1 vient s'adapter dans des rainurages de ces deux mâchoires. De plus, le support 1 vient glisser sur un condenseur de lumière 12 et se trouve positionné avec une grande précision face à l'objectif 13 qui se trouve à une distance variable suivant le calibre choisi (entre 1/10 de mm et 1 mm). Ainsi on ménage un espace 14 (cf. la figure 2) qui peut être vide dans le cas d'une observation à sec, mais rempli de liquide pour une analyse à immersion. Dans ce dernier cas, le liquide peut être simplement de l'eau et en particulier de l'eau ayant servi au dernier rinçage du support 1 lors d'une opération de coloration en continu. Il peut évidemment s'agir d'huile à immersion ou d'eau glycérinée ou de tout autre liquide transparent et possédant un indice de réfraction compatible avec l'optique utilisée.

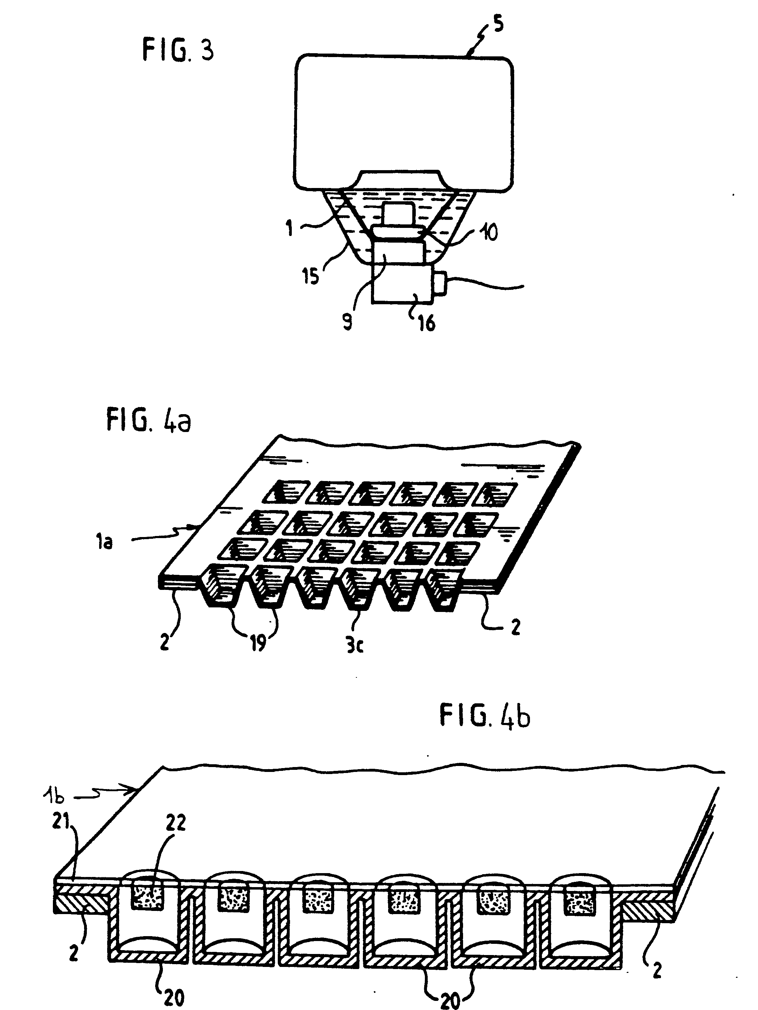

La figure 3 montre le support 1 déroulé et placé dans la pièce 10 qui porte le système d'illumination 12 (à fibre optique) de la figure 2. Puis un mouvement relatif permet l'immersion dans une cuvette 15 qui comprend la mâchoire 9 porteuse de l'optique de grossissement 13 qui est raccordée à un dispositif de saisie d'image 16, qui peut être optique pour l'observation directe et/ou électronique (caméra TV ou CCD). Ici, dans cette version à liquide, les pièces 9 et 10 ne sont pas articulées comme décrit précédemment, mais viennent s'emboîter par un mouvement de translation. Le défilement du ruban 1 entre les mâchoires 9 et 10 peut être effectué à l'aide d'une cassettes (de type connu).

Dans un certain nombre de cas, notamment pour l'hématologie, il n'est pas nécessaire de prévoir un déplacement latéral des optiques pour balayer une surface plus grande. Pour d'autres applications, en particulier en histologie, il est nécessaire d'analyser une trace de plusieurs millimètres de large pouvant aller jusqu'à un centimètre.

Dans ces conditions, on peut résoudre cette question avec trois types de solutions. Tout d'abord, il est aisé de disposer plusieurs dispositifs optiques en série ayant des caractéristiques de puissance et/ou d'éclairage différents ou identiques et, dans ce dernier cas, seule la position de l'axe optique varie procurant ainsi un doublement de la surface explorée (pour deux dispositifs). Il s'agit évidemment d'une solution coûteuse si le but est seulement d'augmenter la surface analysée. En revanche, la disposition en série offre une perspective très intéressante d'analyser de façon très rapide le même objet microscopique selon des caractéristiques différentes; par exemple, analyse globale à faible grossissement en contraste de phase, suivie d'une analyse à fort grossissement en fluorescence à différentes longueurs d'ondes.

Une autre solution est de faire coulisser les pièces 12 et 13 de la figure 2 par rapport aux mâchoires 9 et 10 par un dispositif de motorisation pas-à-pas.

Enfin, on peut utiliser des objectifs à très grand champ et haute définition, ce qui oblige à disposer d'une caméra à haute performance. Le choix entre ces trois solutions dépendra de l'application visée et le dispositif, tel qu'il est conçu, offre de ce point de vue une grande versatilité.

Un des problèmes essentiels dans le diagnostic cytologique et histologique automatisé est de pouvoir retrouver l'information suspecte très rapidement. Le but visé par la présente invention est de permettre un contrôle journalier très rapide par le médecin spécialiste. Il y a lieu de rappeler qu'une cassette, telle que la cassette 5 de la figure 3, peut contenir l'équivalent de plusieurs centaines de frottis ou biopsies et qu'il est ainsi possible de faire redéfiler le support en s'arrêtant sur les zones qui recèlent un évènement remarquable. Pour cela les pistes magnétiques 2 du support 1 défilent devant des têtes magnétiques d'enregistrement et de lecture.

La séquence complète de traitement de l'information est la suivante: au départ, la cassette ne comprend sur les pistes magnétiques que les codes de numéros de série, de type de support (pour empêcher une mauvaise utilisation) et de repérage de distance. Lorsque la cassette est chargée en échantillons biologiques, ceux-ci sont déposés sur des zones prédéfinies par programme suivant la taille et la nature de l'échantillon. A chaque dépôt correspondra, sur une piste, le code de prélèvement qui repère le sujet et le rang (par exemple, numéro de la coupe sériée). La deuxième piste est, par exemple, réservée à l'analyse et y sont inscrits au fur et à mesure deux types d'information: d'une part des impulsions de repérage de position d'évènements caractéristiques et d'autre part les résultats quantitatifs de l'analyse réinjectée par un micro-ordinateur de pilotage. On peut admettre que le temps d'analyse moyen par échantillon est de l'ordre de la minute.

Lors du contrôle, le défilement très accéléré peut faire apparaître à volonté les cellules suspectes dont le taux d'occurrence est en principe de l'ordre de quelques pour-cent, ce qui conduit à un temps de contrôle acceptable.

Suivant la complexité de l'analyse et des résultats à stocker, les deux pistes latérales peuvent être divisées elles-mêmes en plusieurs pistes réservées à des informations différentes.

Ainsi le support est à la fois destiné au recueil des échantillons biologiques et à leur analyse, mais aussi au stockage des informations.

A ce sujet, il est intéressant de noter qu'il est possible de protéger les informations concernant certains échantillons biologiques par 'ers, notamment les biopsies ou les préparations de médecine légale, contre toute indiscrétion gr  e au codage informatique.

Il y a lieu de souligner, en outre, que la présence de pistes magnétiques latérales permet, entre autres, le codage et le repérage avec grande précision (de l'ordre de 10 μm) évitant de recourir à des dispositifs mécaniques complexes de déroulement et de repérage.

Le support 1, grâce à sa forme spéciale, ménage un espace 4 entre spires qui peut contenir un film liquide quelconque. Pour apprécier cette possibilité, on peut considérer l'emploi du ruban 1 selon l'invention en connexion avec des opérations en phase liquide, comme les déparaffinages, fixations, colorations et réactions biochimiques variées. En particulier, l'exemple suivant comprend huit opérations en séquence: une opération de fixation, de la durée de cinq minutes, trois opérations de rinçage de la durée de deux minutes chacune, une opération de coloration de la durée de dix minutes et trois opérations de rinçage de la durée de deux minutes. Le support 1 est déroulé, par exemple en une minute, en passant dans un bain de fixation, puis réenroulé en une minute, un film liquide de fixation se trouvant formé dans l'espace 4 par capillarité. Durant trois minutes, le support reste enroulé. Puis le support est déroulé dans le premier bain de rinçage, puis réenroulé et ainsi de suite. De la sorte, en jouant sur les alternances de déroulement, immersion puis réenroulement on peut mener un cycle complet de fixation/coloration portant sur un support équivalent à 500 lames de verre dans un temps très peu différent de celui nécessité par une seule lame. De plus, on peut envisager de traiter en parallèle plusieurs cassettes dans une machine de taille réduite.

Enfin, dans certains cas, lorsque les débits sont très réduits, on peut utiliser la cassette en continu dans un appareil où les opérations se déroulent dans un même bac en changeant le liquide, ou directement sur le support par pulvérisation ou goutte-à-goutte, ou encore dans des bacs successifs.

La protection des échantillons est obtenue par l'espace 4. En archivage, on peut: - soit garder les échantillons secs, - soit les jarder dans un liquide neutre de conservation, qui peut être celui qui a servi à l'observation et au rinçage (eau glycérinée, huile, etc...). On peut, dans certains cas, envisager de déposer un film adhésif transparent ou encore des lamelles souples.

Le support selon l'invention vise également à permettre une utilisation en culture cellulaire et plus spécialement bactérienne. Les conditions à respecter sont très différentes de celles correspondant à l'analyse de cellules et tissus non vivants. Dans ce cas, les impératifs essentiels sont:

- travail en phase liquide en micro-puits;
- non contamination;
- réactifs ou substrats variés d'un puits à l'autre;
- stockage de douze à vingt-quatre heures à 37°C pour permettre la prolifération bactérienne;
- analyse optique (turbidimétrie, néphélémétrie, ou réaction colorimétrique).

Les résultats obtenus permettent l'identification des bactéries, mais aussi définissent les antibiotiques efficaces et les doses correspondantes. A cet égard il faut souligner que ces manipulations se font actuellement en boîte de Petri multitrous ou en galeries contenant les milieux et réactifs sous forme lyophilisée et exigent des investissements énormes en personnel, en temps et en produits consommables, ce qui justifie pleinement une approche automatisée.

La modification du support de base, telle qu'elle vient d'être décrite, se conçoit selon deux voies différentes:

- la création de micro-puits directement dans le support, ou encore
- la fixation de micro-puits sur le support.

Les figures 4a et 4b montrent deux variantes 1a et 1b du ruban 1, avec des micro-puits qui peuvent être polyédriques 19, ou cylindriques 20. On note que les micro-puits sont formés par moulage dans le ruban et que ce dernier porte les deux pistes magnétiques 2 de repérage et de stockage des résultats.

Les micro-puits 20 de figure 4b peuvent comprendre un produit lyophilisé adhérent, ou ce produit peut être adhérent à un film adhésif de protection 21 sous forme de tampons 22 imprégnés de produit lyophilisé, ces tampons étant protégés également par une pellicule de protection (non représentée), appliquée préalablement sur le film 21, qui est enlevée avant l'emploi.

Ces tampons 22 sont porteurs des substrats, des colorants ou autres lyophilisés.

Un ruban conforme aux figures 4a et 4b peut être lui aussi inséré dans une cassette de stockage et de défilement (connue en soi). Cette cassette fait avancer le ruban 1a ou 1b rangée après rangée et le dispositif de distribution d'échantillons de cellules en suspension (non représenté), éventuellement couplé à un moteur pas-à-pas, injecte dans chaque micro-puits une petite quantité de la suspension cellulaire 3c à analyser.

A cet effet, il y a lieu de noter que le recueil des cellules peut s'obtenir de façon automatique à la sortie d'un cytofluorimètre trieur de cellules, connu des techniens en la matière.

Une plaquette (non représentée) disposée entre les bobines de la cassette assurerait dans ce cas la planéité du ruban 1a ou 1b; les micro-puits sont ensuite recouverts du film adhésif 21 qui porte les petits tampons imprégnés de produits lyophilisés. Ce film adhésif 21 assure d'une part l'étanchéité dans n'importe quelle position des puits remplis, mais aussi évite la contamination tout en permettant les échanges gazeux si les réactions sont désirées en condition aérobie: à cet effet, le film 21 est perméable à l'air. Il va de soi que pour des réactions en condition anaérobie, le film 21 est imperméable à l'air. De toutes façons, ce film 21 est imperméable à la suspension cellulaire, qui ne peut pas s'écouler même avec les puits en position inversée.

Avec une cassette pouvant comporter plusieurs milliers de micro-puits, il est aussi possible de tester en parallèle entre 30 et 50 inoculats. La cassette est alors placée dans une étuve à 37°C couplée à un dispositif de lecture, notamment à fibres optiques, dont une fibre optique sert à l'arrivée, tandis qu'une autre fibre optique sert au recueil de la lumière: celle-ci est avantageusement réfléchie sur la face réfléchissante (par exemple argentée) desdits tampons de produit lyophilisé. Les conditions de mesure peuvent varier suivant la position du micro-puits et aller de la mesure en diffusion jusqu'au maximum de la luminosité dans des conditions de réflexion.

Le déroulement et le réenroulement du support permettent non seulement de réaliser des mesures en cinétique sur la totalité des micro-puits du ruban, à savoir de contrôler comment se développe dans le temps la réaction au niveau de chaque micro-puits par des mouvements de va-et-vient répétés, mais également de communiquer aux suspensions cellulaires l'agitation nécessaire à favoriser le déroulement des réactions. Le retrait de ladite étuve se fait lorsque les résultats acquis deviennent significatifs.

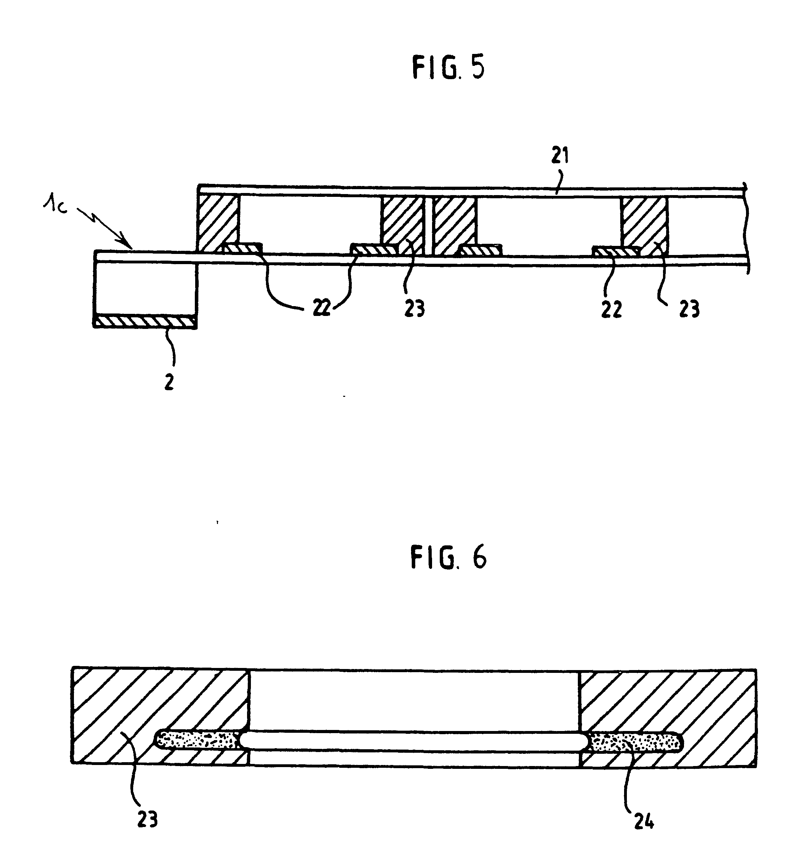

Pour ne pas modifier le ruban lisse 1, tel qu'il a été défini initialement, on peut créer les micro-puits en fixant sur le ruban des anneaux 23 qui eux-mêmes contiennent des tampons 22 imprégnés de produit lyophilisé (on obtient ainsi le ruban 1c de figures 5). Un adhésif 21 recouvre également dans ce cas les micro-puits 23 après leur remplissage. La hauteur des pistes magnétiques 2 est augmentée pour permettre à l'espace 4 de contenir les micro-puits.

Dans une autre variante les anneaux 23 possèdent une gorge 24 (cf. figure 6) qui contient la substance lyophilisée. Lors de la fixation du film adhésif 21, des écrasements facilitent la libération du produit et sa diffusion dans le micro-puits.

## Revendications

1. Ruban flexible et transparent, réalisé en un polymère non hydrophobe et destiné à supporter des échantillons biologiques (3a, 3b, 3c) à analyser, caractérisé en ce qu'il est pourvu de deux épaulements (2) continus et longitudinaux, qui sont disposés le long des bords de la face du ruban (1, 1a, 1b, 1c) opposée à la face destinée à supporter lesdits échantillons (3a, 3b, 3c) et qui délimitent un espace central (4).

2. Ruban selon la revendication 1, caractérisé en ce que les deux épaulements (2) sont réalisés en un polymère identique à celui dont est constitué le ruban (1, 1a, 1b, 1c).

3. Ruban selon la revendication 1, caractérisé en ce que les deux épaulements (2) sont réalisés en un matériau magnétique et constituent deux pistes latérales de codage des échantillons biologiques (3a, 3b, 3c) à analyser et de stockage d'informations.

4. Ruban selon la revendication 3, caractérisé en ce que chaque piste latérale est subdivisée en plusieurs pistes secondaires, dont le nombre est fonction de la complexité de l'analyse et des informations à stocker.

5. Ruban selon l'une quelconque des revendications 1 à 4, caractérisé en ce que celui-ci comporte une pluralité de rangées de micro-puits (19, 20, 23), disposés perpendiculairement à l'axe longitudinal du ruban (1a, 1b, 1c), sauf en correspondance de l'emplacement desdits épaulements latéraux (2).

6. Ruban selon l'une quelconque des revendications 1 à 5, caractérisé en ce qu'il comporte un film transparent auto-adhésif (21) de protection des échantillons biologiques (3c).

7. Ruban selon l'une quelconque des revendications 5 ou 6, caractérisé en ce que les micro-puits (19, 20) sont réalisés en une seule pièce avec le ruban (1a).

8. Ruban selon la revendication 7, caractérisé en ce que les micro-puits (19) sont polyédriques.

9. Ruban selon la revendication 7, caractérisé en ce que les micro-puits (20) sont cylindriques.

10. Ruban selon l'une quelconque des revendications 5 ou 6, caractérisé en ce que ledit ruban (1c) porte des micro-puits constitués par des anneaux toroïdaux (23) qui sont fixés sur le ruban.

11. Ruban selon la revendication 10, caractérisé en ce que lesdits épaulements (2) présentent une hauteur légèrement supérieure à la hauteur des micro-puits (23).

12. Ruban selon la revendication 7, caractérisé en ce que des tampons (22) imprégnés d'un produit lyophilisé approprié sont appliqués sur la face d'un film (21) de protection des micro-puits (19, 20) qui adhère au ruban (1a, 1b).

13. Ruban selon la revendication 12, caractérisé en ce que la face de chaque tampon (22) qui est orientée vers le fond du micro-puits correspondant (20) est argentée.

14. Ruban selon l'une quelconque des revendications 12 ou 13, caractérisé en ce qu'un deuxième film adhésif transparent protège lesdits tampons (22) de produit lyophilisé.

15. Ruban selon la revendication 10, caractérisé en ce que des tampons (22) imprégnés d'un produit lyophilisé sont disposés sur le fond de chaque micro-puits (23) et logés en partie dans des encoches ménagées à la base de chaque anneau (23).

16. Ruban selon la revendication 15, caractérisé en ce que ledit produit lyophilisé est logé dans une gorge (24) circulaire, continue ou non, ménagée dans la paroi interne desdits anneaux toroïdaux (23).

17. Ruban selon l'une quelconque des revendications 7 à 10, caractérisé en ce que le film (21) de protection des échantillons biologiques est perméable à l'air.

18. Ruban selon l'une quelconque des revendications 7 à 10, caractérisé en ce que le film (21) de protection des échantillons biologiques est imperméable à l'air.

19. Dispositif d'analyse microscopique d'échantillons biologiques (3a, 3b, ...) fixés sur le ruban (1) selon l'une quelconque des revendications 1 à 4, caractérisé en ce qu'il comporte deux mâchoires (9, 10) de serrage dudit ruban (1), dont une mâchoire (10) est solidaire d'un condenseur de lumière (12), tandis que l'autre mâchoire (9) est solidaire d'un objectif microscopique (13) aligné avec le condenseur (12), ces deux mâchoires (10 et 9) présentant chacune une ouverture centrale d'illumination et observation des échantillons (3a, 3b,..), respectivement.

20. Dispositif d'analyse selon la revendication 19, caractérisé en ce que, dans le cas d'une observation à sec, les deux mâchoires (9, 10) sont articulées autour d'une charnière (11).

21. Dispositif d'analyse selon la revendication 19, caractérisé en ce que, dans le cas d'une observation en phase liquide, à savoir en immersion, la mâchoire (10) de support de l'objectif microscopique (13) est fixée sur le fond d'une cuvette (15) contenant le liquide d'immersion du ruban (1), tandis que la mâchoire (9) de support du condenseur de lumière (12) est séparée de la mâchoire (10) portant l'objectif microscopique et s'emboîte dans cette dernière.

**Patentansprüche**

1. Biegsames und transparentes Band, das aus einem nicht hydrophoben Polymer besteht und zum Tragen von zu analysierenden biologischen Proben (3a, 3b, 3c) vorgesehen ist, dadurch gekennzeichnet, daß es über zwei durchgehende sich in Längsrichtung erstreckende Schultern (2) verfügt, die entlang dem Rand der Seite des Bandes (1, 1a, 1b, 1c) angeordnet sind, die entgegengesetzt zu der Seite ist, die zum Tragen der besagten Proben (3a, 3b, 3c) vorgesehen ist und die einen mittigen Raum (4) begrenzen.

2. Band nach Anspruch 1, dadurch gekennzeichnet, daß die beiden Schultern (2) aus einem Polymer bestehen, das identisch zu dem ist, aus dem das Band (1, 1a, 1b, 1c) besteht.

3. Band nach Anspruch 1, dadurch gekennzeichnet, daß die beiden Schultern (2) aus einem magnetischen Stoff hergestellt sind und zwei seitliche Spuren zum Kodieren der zu analysierenden biologischen Proben (3a, 3b, 3c) und zur Aufnahme von Informationen bilden.

4. Band nach Anspruch 3, dadurch gekennzeichnet, daß jede seitliche Spur in eine Vielzahl von Unterspuren unterteilt ist, deren Anzahl eine Funktion der Komplexität der Analyse und der zu speichernden Informationen ist.

5. Band nach einem der Ansprüche 1 bis 4, dadurch gekennzeichnet, daß dieses eine Vielzahl von Reihen von Mikroschächten (19, 20, 23) aufweist, die rechtwinklig zur Längsachse des Bandes (1a, 1b, 1c) - außer an den Stellen der besagten seitlichen Schultern (2) - angeordnet sind.

6. Band nach einem der Ansprüche 1 bis 5, dadurch gekennzeichnet, daß es über einen selbstklebenden transparenten Film (21) zum Schutz der biologischen Proben (3c) verfügt.

7. Band nach einem der Ansprüche 5 oder 6, dadurch gekennzeichnet, daß die Mikroschächte (19, 20) einstückig mit dem Band (1a) hergestellt sind.

8. Band nach Anspruch 7, dadurch gekennzeichnet, daß die Mikroschächte (19) polyedrisch sind.

9. Band nach Anspruch 7, dadurch gekennzeichnet, daß die Mikroschächte (20) zylindrisch sind.

10. Band nach einem der Ansprüche 5 oder 6, dadurch gekennzeichnet, daß das besagte Band (1c) Mikroschächte aufweist, die aus auf dem Band befestigten torischen Ringen (23) bestehen.

11. Band nach Anspruch 10, dadurch gekennzeichnet, daß die besagten Schultern (2) eine Höhe aufweisen, die etwas über der Tiefe der Mikroschächte (23) liegt.

12. Band nach Anspruch 7, dadurch gekennzeichnet, daß mit einem geeigneten lyophilisierten Produkt getränkte Tampons (22) auf der Seite eines Schutzfilmes (21) für die Mikroschächte (19, 20) aufgebracht sind, welcher auf dem Band (1a, 1b) haftet.

13. Band nach Anspruch 12, dadurch gekennzeichnet, daß die Seite eines jeden Tampons (22), die zum Boden des zugeordneten Mikroschachtes (20) hin orientiert ist, versilbert ist.

14. Band nach einem der Ansprüche 12 oder 13, dadurch gekennzeichnet, daß ein zweiter transparenter klebender Film die besagten Tampons (22) vor dem lyophilisierten Produkt schützt.

15. Band nach Anspruch 10, dadurch gekennzeichnet, daß mit einem lyophilisierten Produkt getränkte Tampons (22) auf dem Boden eines jeden Mikroschachtes (23) angeordnet und zum Teil in Taschen, die in der Grundfläche eines jeden Ringes (23) ausgespart sind, eingefügt sind.

16. Band nach Anspruch 15, dadurch gekennzeichnet, daß das besagte lyophilisierte Produkt in einer kreisförmigen Auskehlung (24) eingebracht ist, die - durchgehend oder nicht - in der inneren Wand der besagten torischen Ringe (23) ausgespart ist.

17. Band nach einem der Ansprüche 7 bis 10, dadurch gekennzeichnet, daß der Film (21) zum Schutz der biologischen Proben luftdurchlässig ist.

18. Band nach einem der Ansprüche 7 bis 10, dadurch gekennzeichnet, daß der Film (21) zum Schutz der biologischen Proben luftundurchlässig ist.

19. Mikroskopische Analysevorrichtung für biologische Proben (3a, 3b, ...), die gemäß einer der Ansprüche 1 bis 4 auf dem Band (1) befestigt sind, dadurch gekennzeichnet, daß sie zwei Klemmbacken (9, 10) für das Band (1) aufweist, von denen ein Backen (10) mit einem Lichtkondensor (12) fest verbunden ist, wohingegen der andere Backen (9) an einem Mikroskopobjektiv (13) befestigt ist, das mit dem Lichtkondensor (12) fluchtet, wobei die beiden Backen (10 und 9) jeweils eine mittige Öffnung zur Beleuchtung bzw. Beobachtung der Proben (3a, 3b, ...) aufweisen.

20. Mikroskopische Analysevorrichtung nach Anspruch 19, dadurch gekennzeichnet, daß im Falle einer trockenen Beobachtung, die beiden Backen (9, 10) um ein Drehgelenk (11) schwenkbar sind.

21. Mikroskopische Analysevorrichtung nach Anspruch 19, dadurch gekennzeichnet, daß im Falle einer Beobachtung in einem flüssigen Medium, nämlich in einer Immersion, die Haltebacke (10) des Mikroskopobjektivs (13) am Boden einer Küvette (15) befestigt ist, die die Immersionsflüssigkeit des Bandes (1) enthält, währenddessen die Haltebacke (9) für den Lichtkondensor (12) von der das Mikroskopobjektiv tragenden Backe (10) getrennt ist und sich in der letzteren einfügt.

**Claims**

1. A flexible and transparent strip made of a non-hydrophobic polymer and intended to hold biological samples (3a, 3b, 3c) to be analyzed, the strip being characterized in that it is provided with two continuous longitudinal shoulders (2) which are disposed along the edges of that face of the strip (1, 1a, 1b, 1c) which is opposite to its face intended to hold said samples (3a, 3b, 3c), and which delimit a central space (4).

2. A strip according to claim 1, characterized in that the two shoulders (2) are made of a polymer which is identical to that from which the strip (1, 1a, 1b, 1c) is constituted.

3. A strip according to claim 1, characterized in that the two shoulders (2) are made of a magnetic material and constitute two lateral tracks for encoding the biological samples (3a, 3b, 3c) to be analyzed and for storing information.

4. A strip according to claim 3, characterized in that each lateral track is subdivided into a plurality of secondary tracks, with the number of secondary tracks being a function of the complexity of the analysis and of the information to be stored.

5. A strip according to any one of claims 1 to 4, characterized in that it includes a plurality of rows of micro-titration wells (19, 20, 23) disposed perpendicularly to the longitudinal axis of the strip (1a, 1b, 1c), except in correspondence with the locations of said lateral shoulders (2).

6. A strip according to any one of claims 1 to 5, characterized in that it includes a self-adhesive transparent film (21) for protecting the biological samples (3c).

7. A strip according to claim 5 or 6, characterized in that the wells (19, 20) are made integrally with the strip (1a).

8. A strip according to claim 7, characterized in that the wells (19) are polyhedral.

9. A strip according to claim 7, characterized in that the wells (20) are cylindrical.

10. A strip according to claim 5 or 6, characterized in that said strip (1c) carries wells constituted by toroidal rings (23) which are fixed on the strip.

11. A strip according to claim 10, characterized in that said shoulders (2) extend over a height which is slightly greater than the height of the wells (23).

12. A strip according to claim 7, characterized in that pads (22) impregnated with an appropriate freeze-dried substance are applied to that face of a film (21) for protecting the wells (19, 20) which adheres to the strip (1a, 1b).

13. A strip according co claim 12, characterized in that the face of each pad (22) directed towards the bottom of the corresponding well (20) is coated with silver.

14. A strip according to claim 12 or 13, characterized in that a second transparent adhesive film protects said pads (22) of freeze-dried substance.

15. A strip according to claim 10, characterized in that pads (22) impregnated with a freeze-dried substance are disposed on the bottom of each well (23) and are received in part in notches provided in the base of each ring (23).

16. A strip according to claim 15, characterized in that said freeze-dried substance is received in a circular groove (24) which may be continuous or otherwise, and which is provided in the inside wall of each of said toroidal rings (23).

17. A strip according to any one of claims 7 to 10, characterized in that the film (21) for protecting the biological samples is permeable to air.

18. A strip according to any one of claims 7 to 10, characterized in that the film (21) for protecting the biological samples is impermeable to air.

19. Apparatus for microscopic analysis of biological samples (3a, 3b, ...) fixed to a strip (1) according to any one of claims 1 to 4, characterized in that the apparatus includes two jaws (9, 10) for clamping to said strip (1), with one of the jaws (10) being fixed to a light condenser (12) while the other jaw (9) is fixed to a microscope objective lens (13) in alignment with the condenser (12), each of said two jaws (10 and 9) having a central opening, respectively for illuminating and for observing the samples (3a, 3b, ...).

20. Analysis apparatus according to claim 19, characterized in that for dry observation the two jaws (9, 10) are hinged about a hinge (11).

21. Analysis apparatus according to claim 19, characterized in that for liquid phase observation, i.e. observation while immersed, the jaw (10) supporting the microscope objective lens (13) is fixed to the bottom of a bowl (15) containing the liquid in which the strip (1) is immersed, while the jaw (9) supporting the light condenser (12) is separate from the jaw (10) carrying the microscope objective lens, and is suitable for fitting thereto.

FIG.1

FIG.2

FIG. 3

FIG. 4a

FIG. 4b

## FIG. 5

## FIG. 6